# EUROPÄISCHE PATENTSCHRIFT

(11) **EP 0 771 406 B1**
(45) Veröffentlichungstag und Bekanntmachung des Hinweises auf die Patenterteilung: **30.09.1998**
(21) Anmeldenummer: 95915132.5
(22) Anmeldetag: 05.04.1995
(51) Int. Cl.: G01B 11/24, G01B 11/00

(54) **EINRICHTUNG UND VERFAHREN ZUM MESSEN UND BERECHNEN GEOMETRISCHER PARAMETER EINES KÖRPERS**
DEVICE AND PROCESS FOR MEASURING AND CALCULATING GEOMETRICAL PARAMETERS OF AN OBJECT
DISPOSITIF ET PROCEDE DE MESURE ET DE CALCUL DE PARAMETRES GEOMETRIQUES D'UN CORPS

(30) Priorität: 05.04.1994 DE 4411498; 17.10.1994 DE 4437096
(43) Veröffentlichungstag der Anmeldung: 07.05.1997
(73) Patentinhaber: VIALOG VISUELLE AUTOMATIONS-ANLAGEN GMBH, 30827 Garbsen (DE)
(72) Erfinder: MORCOM, Christopher, D-29233 Celle (DE); SACHS, Carsten, D-30455 Hannover (DE); WENKE, Oliver, D-31535 Neustadt (DE)
(74) Vertreter: Körner, Peter
(86) Internationale Anmeldenummer: DE9500467
(87) Internationale Veröffentlichungsnummer: WO9527184

(56) Entgegenhaltungen:
- EP-A- 0 346 288
- EP-A- 0 403 908
- WO-A-88/05152
- US-A- 5 278 632
- PATENT ABSTRACTS OF JAPAN vol. 012 no. 383 (P-770) ,13.Oktober 1988 & JP,A,63 128213 (MITSUTOYO CORP) 31.Mai 1988,
- WERKSTATTSTECHNIK, ZEITSCHRIFT FUR INDUSTRIELLE FERTIGUNG, Bd. 73, Nr. 10, Oktober 1983 WURZBURG (DE), Seiten 617-622, H.J. WARNECKE E.A. 'OPTOELEKTRONISCHE KOORDINATENMESSTECHNIK'

## Beschreibung

Die Erfindung betrifft eine Einrichtung zum Messen und Berechnen geometrischer Parameter eines Körpers nach dem Oberbegriff des Anspruchs 1 und ein Verfahren zum Messen und Berechnen geometrischer Parameter eines Körpers nach dem Oberbegriff des Anspruchs 12.

Eine derartige Einrichtung und ein derartiges Verfahren sind aus der EP 0 403 908 bekannt. Die bekannte Einrichtung umfaßt einen Grundkörper mit einem Tisch, auf dem eine Aufnahmevorrichtung für einen Körper verschiebbar ist. Oberhalb des Tisches ist eine Dreibeinkonstruktion angeordnet, die aus drei am Rande des Tisches angebrachten Schenkeln bestehen, welche nach oben hin zu einem T-förmigen Portal ergänzt sind. Die drei Schenkel sind jeweils um 90° zueinander versetzt. An den Schenkeln sind Kameras angeordnet, die auf Fahrbahnen in vertikaler Richtung verfahrbar sind. Im Zentrum des T-förmigen Portals befindet sich eine weitere stationäre Kamera. Die drei auf den Schenkeln angeordneten Kameras sowie die im Portal angeordnete Kamera sind auf die Längsmittelachse des Tisches gerichtet. An den jeweiligen Kameras sind Beleuchtungseinrichtungen unmittelbar angeordnet, die gegen den zu messenden Körper gerichtet sind.

Die Kameras sind an ein Bildverarbeitungssystem angeschlossen. Mittels der Kameras werden die Konturen des zu messenden Körpers gleichzeitig unter unterschiedlichen Blickwinkeln aufgenommen. Die gemessenen Konturen werden mit Sollkonturen verglichen und als Kurvendiagramme oder Tabelle angezeigt.

Die Kameras sind ausschließlich als Auflichtkameras ausgebildet, so daß für die Messung verschiedener Meßpunkte des Körpers die Aufnahmevorrichtung stets so verfahren werden muß, daß der Meßpunkt scharf auf den Kameras abgebildet wird. Die Meßwerterfassung ist daher umständlich und erfordert eine ständige Kontrolle durch das Bedienungspersonal, denn bei unscharfer Abbildung wäre das Größenverhältnis der abgebildeten Punkte zum Original fehlerhaft und würde zu Meßfehlern führen.

Der Erfindung liegt die Aufgabe zugrunde, eine eingangs genannte Einrichtung dahingehend zu verbessern, daß die Meßpunkte gezielt angefahren werden können und dadurch die Messung einfacher, schneller und genauer durchgeführt werden kann.

Diese Aufgabe wird bei einer Einrichtung nach dem Oberbegriff des Anspruchs 1 durch die im Kennzeichen angegebenen Merkmale gelöst.

Auf einem ersten, als Durchlichtmeßsensor ausgebildeten Flächenmeßsensor wird dabei die Umrißkontur des zu messenden Körpers als Schattenbild abgebildet. Da die Bildebene des Schattens der Umrißkontur unabhängig vom Durchmesser des zu messenden Körpers ist, entfällt die Notwendigkeit einer gesonderten Einstellung des Abstandes zwischen dem zu messenden Körper und dem Durchlichtmeßsensor zur Fokussierung. Das Abbildungsverhältnis des Schattenbildes des Körpers auf dem Durchlichtmeßsensor ist stets konstant, so daß ein ermittelter Meßpunkt an der Außenkontur des zu messenden Körpers von einem als Auflichtmeßsensor ausgebildeten zweiten Flächenmeßsensor gezielt so angefahren werden kann, daß dieser Punkt in der Kalibrierebene und damit im richtigen Abbildungsmaßstab auf dem Auflichtmeßsensor abgebildet wird. Eine Begutachtung der Schärfe durch das Bedienungspersonal ist also nicht erforderlich.

Befindet sich der Auflichtmeßsensor auf einem zweiten Schlitten, der zusammen mit dem Schlitten, auf dem der Durchlichtmeßsensor angeordnet ist, gemeinsam verfahrbar ist, so kann beispielsweise ein ausgewählter Meßpunkt durch Verfahren des ersten Schlittens mit dem Durchlichtmeßsensor so angefahren werden, daß er sich mit einer Markierung deckt, die mit der Kalibrierebene des Auflichtmeßsensors identisch ist. Bei Erreichen des Punktes auf der Außenkontur befindet sich dann der Auflichtmeßsensor exakt in der Position, in der derselbe Punkt scharf abgebildet wird. Das Abbildungsverhältnis mehrerer Punkte, die in derselben Ebene liegen, ist damit korrekt.

Vorzugsweise ist der erste Schlitten ausschließlich in einer Achsrichtung relativ zum Grundkörper verfahrbar und die Aufnahmevorrichtung ist auf einem dritten Schlitten angeordnet, der relativ zum Grundkörper in Richtung der Drehachse verfahrbar ist.

Durch die Beschränkung der Freiheitsgrade, bezüglich der einerseits der erste Schlitten und andererseits der dritte Schlitten verfahrbar sind, besteht ein unmittelbarer Bezug der Verfahrwege zum Grundkörper, so daß die in der Praxis nicht völlig auszuschließenden Justagefehler nur jeweils direkt in das Meßergebnis eingehen, sich jedoch nicht vervielfachen, wie es bei der Überlagerung von Bewegungen in mehreren Freiheitsgraden der Fall wäre. Die Gesamtmeßgenauigkeit wird so gegenüber der bekannten Einrichtung verbessert.

Zur Erfassung eines Meßpunktes aus einer dritten Perspektive kann auf dem zweiten Schlitten ein dritter als Auflichtmeßsensor ausgebildeter Flächenmeßsensor angeordnet sein, dessen optische Achse senkrecht zu den optischen Achsen der anderen Flächenmeßsensoren ausgerichtet ist oder in den Strahlengang des Auflichtmeßsensors kann wahlweise ein Pentaprisma eingefügt sein, durch welches die Meßachse des Auflichtmeßsensors im rechten Winkel zu seiner optischen Achse und der optischen Achse des Durchlichtmeßsensors umlenkbar ist.

Die erste Alternative stellt wegen des Vorhandenseins eines dritten Flächenmeßsensors zwar einen höheren gerätetechnischen Aufwand dar, bietet aber den Vorteil, daß die Abbildung eines Meßpunktes gleichzeitig unter drei Betrachtungsrichtungen erfolgen kann. Bei der zweiten Alternative muß zur Umschaltung der Betrachtungsrichtungen des Auflichtmeßsensors das Pentaprisma in den Strahlengang eingefügt werden. Die beiden Betrachtungsrichtungen können aber über ein und denselben Auflichtmeßsensor erfolgen. Neben der Einsparung eines dritten Flächenmeßsensors verzichtet diese Lösung auch auf die sonst erforderlichen Halterungsmittel für den weiteren Flächenmeßsensor, so daß sich dadurch auch eine Gewichtsreduktion ergibt und die Lagerung sowie der Antrieb für den zweiten Schlitten einfacher ausgebildet werden kann. Damit wird auch die Belastung des ersten Schlittens und dessen Antriebs verringert. Durch die Verwendung eines Pentaprismas wird sichergestellt, daß die Betrachtungsrichtung des Auflichtmeßsensors exakt im rechten Winkel umgelenkt wird und die Genauigkeit der Ausrichtung des Pentaprismas nicht als Meßfehler in das Meßergebnis eingeht.

Eine dem Durchlichtmeßsensor zugeordnete Beleuchtungseinrichtung ist vorzugsweise koaxial zur optischen Achse des Durchlichtmeßsensors auf dem ersten Schlitten auf der dem Durchlichtmeßsensor gegenüberliegenden Seite der Drehachse der Aufnahmevorrichtung angeordnet und umfaßt eine ein paralleles Lichtbündel aussendende Kollimatoroptik. Der Durchlichtmeßsensor besitzt eine telezentrische Optik. Durch diese Ausgestaltung ist sichergestellt, daß ein Körper in jeder beliebigen Position des Strahlenganges zwischen der Beleuchtungseinrichtung und dem Durchlichtmeßsensor ein konturenscharfes Schattenbild auf den Durchlichtmeßsensor mit einem konstanten Abbildungsmaßstab wirft. Dadurch sind exakte Messungen der Außenkontur für jede Größe und Lage eines zu messenden Körpers ohne Einstellmaßnahmen möglich.

Die dem Auflichtmeßsensor zugeordnete Beleuchtungseinrichtung ist als koaxial zur optischen Achse des Auflichtmeßsensors angeordnete Ringleuchte ausgebildet. Durch diese Ausgestaltung der Beleuchtungseinrichtung ergibt sich eine sehr gleichmäßige Ausleuchtung der Oberfläche des zu messenden Körpers. Dies stellt sicher, daß Helligkeitssprünge nur an Ecken und Kanten des abgebildeten Körpers auftreten, nicht aber aus einer ungleichmäßigen Beleuchtung resultieren.

Vorzugsweise ist die Optik des Auflichtmeßsensors so justiert, daß die optische Achse des Durchlichtmeßsensors in der Kalibrierebene des Auflichtmeßsensors liegt. Die beiden Flächenmeßsensoren sind durch diese Maßnahme miteinander verkoppelt, wodurch bei Verfahren des Durchlichtmeßsensors auf einen ausgewählten Meßpunkt derselbe Meßpunkt in der anderen, um 90° gedrehten Betrachtungsrichtung automatisch scharf auf dem Auflichtmeßsensor abgebildet wird.

Gemäß einer Weiterbildung ist auf dem ersten Schlitten parallel und neben dem Durchlichtmeßsensor sowie auf dem Niveau dessen optischer Achse eine Lichtschranke mit einem parallelen kleinkalibrigen Lichtbündel angeordnet und ein Sensor der Lichtschranke ist mit dem Rechner verbunden. Mittels dieser Lichtschranke ist es möglich, automatisch eine anfängliche Positionierung des zu messenden Körpers in Richtung seiner Längsachse durchzuführen. Beim Kreuzen der Lichtschranke wird das freie Ende des zu messenden Körpers dann automatisch im Zentrum des Durchlichtmeßsensors abgebildet. Handelt es sich bei dem zu messenden Körper z. B. um ein Bearbeitungswerkzeug, bei der die zur Bestimmung der geometrischen Parameter anzufahrenden Meßpunkte in der Nähe des freien Endes des Körpers liegen, so werden auch diese Bereiche gleichzeitig auf dem Durchlichtmeßsensor abgebildet und können auf kürzestem Wege gezielt angefahren werden.

Auf dem zweiten Schlitten kann neben dem Auflichtmeßsensor sowie auf dem Niveau dessen optischer Achse wenigstens ein Abstandssensor angeordnet sein, der mit dem Rechner verbunden ist. Mit diesem Abstandssensor kann durch Drehen des Körpers die Oberflächenkontur gescannt werden, so daß über die Bestimmung von Abstands- Minima und -Maxima oder Maxima der Abstandsgradienten eine zunächst grobe Ausrichtung der Drehposition möglich ist, die sich dann nach Umschaltung auf den Durchlichtmeßsensor und den Auflichtmeßsensor korrigieren läßt.

Vorzugsweise ist der Abstandssensor als optischer Sensor, z. B. als Lasertriangulator und/oder als mechanischer Taster ausgebildet. Mit dem Lasertriangulator ist eine sehr schnelle berührungslose Meßwerterfassung möglich. Der mechanische Taster wird zweckmäßig dann eingesetzt, wenn eine berührungslose optische Messung z. B. wegen der Oberflächenstruktur des zu messenden Körpers ungenaue Ergebnisse liefert oder bei innenliegenden Flächen auch einer optischen Messung nicht zugänglich ist.

Bei einer praktischen Ausführung ist der Verfahrweg der Schlitten auf den Körper zu auf einen Sicherheitsabstand vom Körper begrenzt. Dadurch werden Kollisionen durch fehlerhaft eingespannte Körper oder durch Fehlbedienungen beim Verfahren der Schlitten ausgeschlossen.

Bezüglich des Verfahrens zum Messen und Berechnen geometrischer Parameter liegt der Erfindung die Aufgabe zugrunde, ein Verfahren nach dem Oberbegriff des Anspruchs 12 dahingehend zu verbessern, daß wahlweise sämtliche relevanten geometrischen Parameter eines zu messenden Körpers mit möglichst wenig Meßschritten und hoher Genauigkeit ermittelt werden können.

Diese Aufgabe wird bei einem Verfahren nach dem Oberbegriff des Anspruchs 12 durch die im Kennzeichen angegebenen Merkmale gelöst.

Dabei wird der Körper zunächst vorläufig so in seiner Axial- und Drehlage positioniert, daß die relevanten Meßpunkte im Abbildungsbereich der Flächenmeßsensoren oder in deren unmittelbaren Nähe liegen, so daß die Meßpunkte auf kurzen Verfahrwegen gezielt angefahren werden können. Abhängig von der Art der zu messenden und zu berechnenden geometrischen Parameter werden anschließend einer oder mehrere Verfahrensschritte ausgeführt, um die Meßpunkte zu setzen und deren Koordinaten zu berechnen. Aus einzelnen oder zu Gruppen verknüpften Meßpunkten können die gewünschten geometrischen Parameter des Körpers dann nach mathematischen Funktionen berechnet werden. Für die Auswertung der geometrischen Parameter sind wiederum mehrere Alternativen möglich. Die geometrischen Parameter können einerseits angezeigt oder gespeichert werden, um für einen Körper die charakteristischen Parameter zu erhalten. Ferner besteht die Möglichkeit, daß die Parameter mit einer Artikeldatenbank verglichen werden, um in einer Qualitätskontrolle fehlerhafte Werkstücke auszusondern oder nach Qualitätsklassen zu bewerten und zu sortieren. Darüber hinaus besteht auch die Möglichkeit, aufgrund einer statistischen Auswertung der geometrischen Parameter eine Produktionsmaschine nachzusteuern, um so schon während der Produktion Einfluß auf die Qualität zu nehmen und die Ausschußrate fehlerhafter Werkstücke zu verhindern.

Um auch Koordinaten von Meßpunkten des Körpers messen zu können, die in tieferen Bereichen als der Außenkontur des Körpers liegen und daher auf dem Durchlichtmeßsensor nicht abgebildet werden können, ist vorgesehen, die Koordinaten durch Verfahren des Auflichtmeßsensors von einer Ausgangsposition in eine Position, in der der Meßpunkt auf dem Auflichtmeßsensor scharf abgebildet wird und Messen des Verfahrweges zu ermitteln. Alternativ kann dies auch durch berührungslose Abstandsmessung mit einem optischen Abstandssensor, z. B. einem Lasertriangulator oder durch Verfahren eines Tasters bis zur Berührung des Meßpunktes erfolgen, wenn eine berührungslose optische Messung, z. B. bei Innenkonturen eines hohlen Körpers, nicht möglich ist. Aus einer Vielzahl derartig gewonnener Koordinaten kann dabei auch ein Oberflächenprofil solcher innenliegender Bereiche ermittelt werden.

Der Auflichtmeßsensor wird in Abhängigkeit zur Position des Durchlichtmeßsensors verfahren, wobei der Auflichtmeßsensor auf die optische Achse des Durchlichtmeßsensors fokussiert ist. Dadurch ergibt sich zwangsweise eine Koppelung der beiden Flächenmeßsensoren, so daß bei Anfahren eines Punktes auf der Oberflächenkontur des Körpers durch den Durchlichtmeßsensor dieser Punkt automatisch scharf auf dem Auflichtmeßsensor abgebildet ist. Meßpunkte, die in derselben Abbildungsebene des Auflichtmeßsensors liegen, können dann ohne weitere Verfahrbewegungen durch den Auflichtmeßsensor vermessen werden.

Eine anfängliche Axialpositionierung des Körpers kann dadurch vorgenommen werden, daß der Körper und der Durchlichtmeßsensor relativ zueinander soweit in Richtung der Drehachse verfahren werden, bis das Maximum der sich in Richtung der Drehachse erstreckenden Außenkontur des Körpers den Strahl einer auf dem Niveau der optischen Achse des Durchlichtmeßsensors angeordneten Lichtschranke schneidet. Bei dieser groben Positionierung befinden sich in den meisten Anwendungsfällen die relevanten Meßpunkte dann im Abbildungsbereich des Durchlichtmeßsensors und können gezielt angefahren werden. Diese Art der anfänglichen Axialpositionierung ist mit hoher Verfahrgeschwindigkeit und automatisch möglich, so daß sich dadurch die insgesamt benötigte Zeit zum Anfahren der einzelnen Meßpunkte reduziert.

Eine anfängliche Drehpositionierung des Körpers kann dadurch vorgenommen werden, daß der Körper gedreht und mittels eines Abstandssensors eine kontinuierliche Messung des Abstandes zwischen der Oberfläche des Körpers und dem Abstandssensor vorgenommen wird und der Körper schließlich in eine Drehlage versetzt wird, in der eines der Abstandsminima oder der Abstandsgradientenmaxima in einer vorgegebenen Drehlage zur optischen Achse des Durchlichtmeßsensors steht. Auch dieser Vorgang kann mit hoher Drehgeschwindigkeit automatisch durchgeführt werden, was dazu beiträgt, die insgesamt benötigte Zeit zum Anfahren der Meßpunkte zu verkürzen.

Eine weitere Steigerung der Genauigkeit läßt sich erzielen, wenn eine eventuelle Schiefstellung des Körpers durch Differenzbildung unterschiedlicher Durchmesser- oder Abstandsextremwerte in wenigstens einer Ebene ermittelt wird und aus der Differenz der Durchmesser- oder Abstandsextremwerte ein Taumelkegel berechnet wird, wobei die berechneten Koordinaten um den Abstand der Kegelmantelfläche von der Drehachse korrigiert werden. Durch eine derartige Korrektur ist es möglich, Fehler zu eliminieren, die durch Abnutzungen, Verunreinigungen oder andere Fehler der Aufnahmevorrichtung oder bei dessen Bedienung auftreten können.

Bei der Festlegung der Meßpunkte bieten sich mehrere Alternativen an. So können z, B. die Meßpunkte manuell vorgegeben werden, um einen beliebigen Körper im einzelnen zu vermessen. Außerdem können Suchbereiche der Meßpunkte in einem ersten Schritt manuell vorgegeben werden. In einem zweiten Schritt werden in diesen Suchbereichen liegende Ecken und/oder Kanten des Körpers automatisch ermittelt, indem die Lage der Ecken und/oder Kanten aus der Auswertung der Änderung des Helligkeits- und/oder Textur- und/oder Farbverlaufs der Abbildung des Körpers auf den Flächenmeßsensoren durch ein Bildverarbeitungsprogramm ermittelt wird.

Diese Maßnahme erfordert nur das grobe Anfahren der Meßpunkte und ist daher schneller als die vorgenannte Variante und in der Genauigkeit unabhängig von der Präzision, mit der der Bediener die Meßpunkte anfährt.

Weiterhin ist es möglich, Suchbereiche der Meßpunkte in einem ersten Schritt durch Eingabe von Parametern für Gruppen von zu messenden Körpern berechnen zu lassen, die Suchbereiche in einem zweiten Schritt automatisch vorzugeben und in einem dritten Schritt die in diesen Suchbereichen liegende Ecken und/oder Kanten des Körpers automatisch zu ermitteln, indem die Lage der Ecken und/oder Kanten aus der Auswertung der Änderung des Helligkeits- und/oder Textur- und/oder Farbverlaufs der Abbildung des Körpers auf den Flächenmeßsensoren durch ein Bildverarbeitungsprogramm ermittelt wird.

Diese Alternative stellt geringe Anforderungen an die Einweisung des Bedienungspersonals und ermöglicht eine automatische Qualitätskontrolle von Werkstücken. Da die anzufahrenden Meßpunkte nicht manuell bestimmt werden müssen, ermöglicht diese Alternative eine besonders schnelle Bestimmung der gewünschten geometrischen Parameter.

Gemäß einer dritten Alternative können die Meßpunkte automatisch durch Scannen einer Vielzahl von Punkten auf Ecken und/oder Kanten des Körpers festgelegt werden, wobei die Lage der Ecken und/oder Kanten aus der Auswertung der Änderung des Helligkeits- und/oder Textur- und/oder Farbverlaufs der Abbildung des Körpers auf den Flächenmeßsensoren durch ein Bildverarbeitungsprogramm ermittelt wird. Durch diese Maßnahme ist eine vollautomatische Ermittlung der geometrischen Parameter von Körpern möglich. Da in diesem Fall mehrere Meßpunkte als bei den vorbeschriebenen Alternativen angefahren werden müssen, ist allerdings mit einer höheren Meßzeit zu rechnen.

Gemäß einer Weiterbildung können aus den geometrischen Parametern eines als Bearbeitungswerkzeug ausgebildeten Körpers die geometrischen Parameter eines mit dem Bearbeitungswerkzeug bearbeiteten Werkstücks berechnet werden.

Diese Maßnahme ermöglicht es z. B., anhand vorgegebener Toleranzen eines bearbeiteten Werkstückes die Toleranzen eines Bearbeitungswerkzeugs festzulegen, mit denen sich das Werkstück noch unter Einhaltung der vorgegebenen Toleranzen herstellen läßt.

Weiterhin ist es möglich, aus den geometrischen Parametern eines als Werkstück ausgebildeten Körpers die geometrischen Parameter eines zu dessen Fertigung dienenden Bearbeitungswerkzeugs zu berechnen.

Dadurch lassen sich Konstruktionsdaten für die Konstruktion eines geeigneten Werkzeuges gewinnen.

Nachfolgend wird die Einrichtung und das Verfahren nach der Erfindung anhand eines Ausführungsbeispiels erläutert.

In der Zeichnung zeigen:

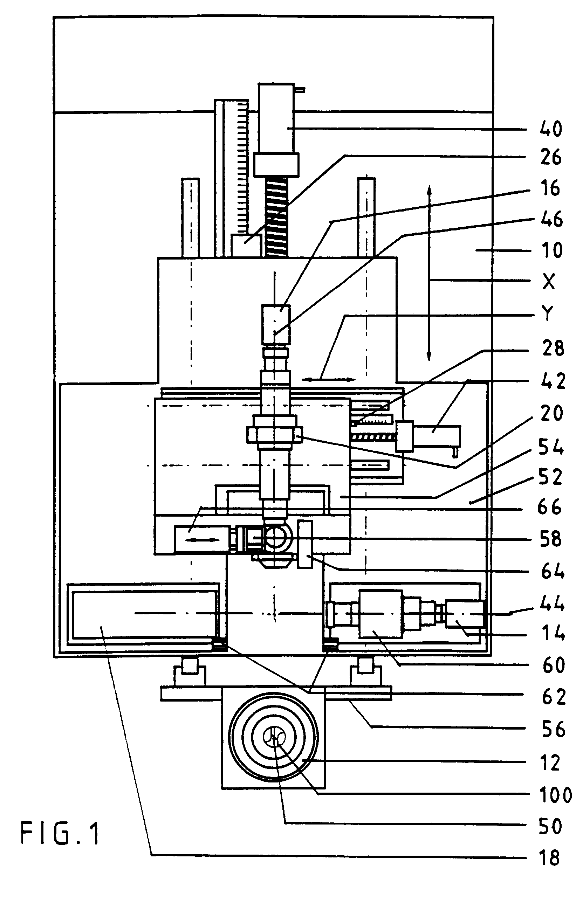

- Fig. 1: eine Draufsicht auf eine schematisch dargestellte Einrichtung,

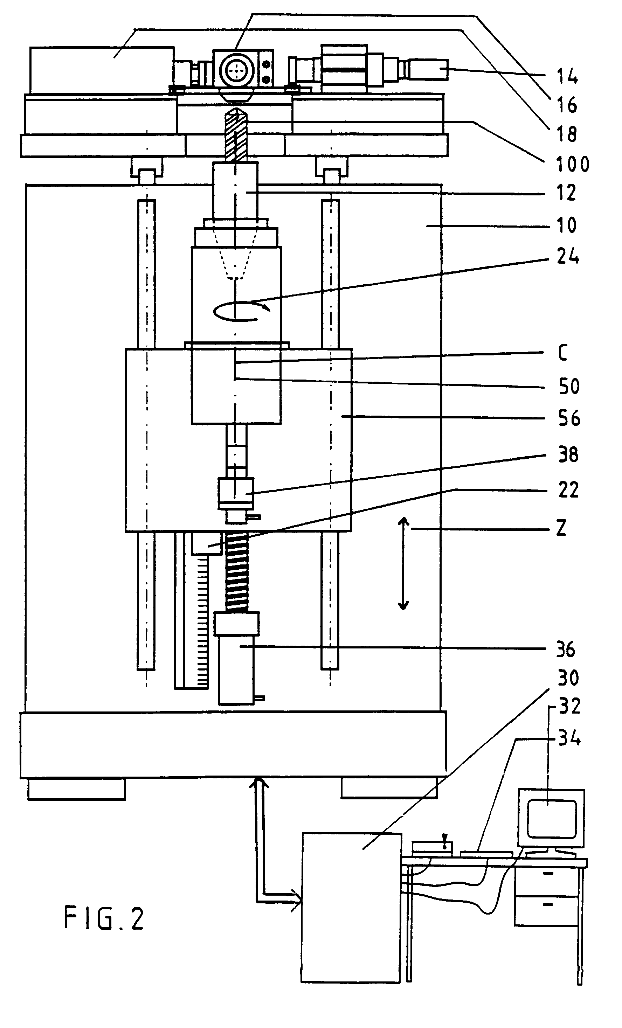

- Fig. 2: eine Seitenansicht einer schematisch dargestellten Einrichtung,
- Fig. 3: eine Abbildung eines zu messenden Körpers, mit markierten Meßpunkten,
- Fig. 4: eine Darstellung einer Auswahl vorgegebener Symbole auf dem Bildschirm eines Rechners zur Bestimmung der Meßpunkte,
- Fig. 5: eine Darstellung einer Auswahl vorgegebener Symbole auf dem Bildschirm eines Rechners zur Bestimmung der Meßkriterien und
- Fig. 6: eine Tabelle zur Verknüpfung der Meßpunkte nach Meßkriterien.

Im Ausführungsbeispiel umfaßt die Einrichtung einen Grundkörper 10, der z. B. als massiver Granitblock ausgebildet sein kann. Der Grundkörper 10 trägt einen ersten verfahrbaren Schlitten 52 mit einem Durchlichtmeßsensor 14, dessen optische Achse 44 parallel zu einer Y-Achse ausgerichtet ist und der auf dem Schlitten 52 mittels eines Antriebs 40 in X-Richtung verfahrbar ist. Dem Durchlichtmeßsensor 14 gegenüber, der z. B. als CCD-Kamera ausgebildet sein kann, befindet sich eine Beleuchtungsvorrichtung 18. Die Beleuchtungsvorrichtung 18 umfaßt eine Lichtquelle und eine Optik, die ein paralleles Lichtbündel koaxial zur optischen Achse 44 des Durchlichtmeßsensors 14 aussendet. Der Durchlichtmeßsensors 14 umfaßt eine telezentrische Optik 60, so daß sichergestellt ist, daß ein unverzerrtes, keine Abbildungfehler enthaltendes Schattenbild eines zu messenden Körpers 100 auf dem Durchlichtmeßsensor 14 in einem großen Tiefenschärfebereich abgebildet wird.

Weiterhin befindet sich auf dem ersten Schlitten 52 neben dem Durchlichtmeßsensor 14 und auf demselben Höhenniveau dessen optischer Achse 44 eine Lichtschranke 62.

Auf dem ersten Schlitten 52 ist ein zweiter Schlitten 54 angeordnet, der in Y-Richtung verfahrbar ist. Auf diesem zweiten Schlitten 54 befindet sich ein Auflichtmeßsensor, 16 der in X-Richtung ausgerichtet ist. Diesem Auflichtmeßsensor 16 ist eine als Ringleuchte ausgebildete Beleuchtungsvorrichtung 20 zugeordnet. Ferner befindet sich auf dem zweiten Schlitten 54 ein Pentaprisma 58, das mittels einer Betätigungsvorrichtung 66 in den Strahlengang des Auflichtmeßsensors 16 eingefügt werden kann und die Betrachtungsrichtung um 90° in Richtung der Z-Achse umlenkt. Zur Beleuchtung dieser Betrachtungsrichtung ist eine weitere Beleuchtungseinrichtung vorgesehen. Weiter befindet sich auf dem zweiten Schlitten 54 eine Abstandsmeßvorrichtung 64, die aus einem Lasertriangulator und/oder einem Taster besteht.

Ferner trägt der Grundkörper 10 einen dritten Schlitten 56 mit einer Aufnahmevorrichtung 12 für einen zu messenden Körper 100. Die Aufnahmevorrichtung 12 ist auf dem Schlitten 56 in Richtung einer Z-Achse verfahrbar und um eine C-Achse drehbar.

Die Schlitten umfassen Verfahrantriebe 36, 40, 42 und Wegaufnehmer 22, 26, 28 und die Aufnahmevorrichtung 12 einen Drehantrieb 38 und einen Winkelaufnehmer 24. Ferner umfaßt die Einrichtung einen Monitor 30 zur Darstellung der Abbildungen der Flächenmeßsensoren 14, 16 sowie einen Rechner 32, mit dem die Meßsensoren 14, 16, 62, 64 sowie die Weg- bzw. Winkelaufnehmer 22, 24, 26, 28 verbunden und über den die Antriebe 36, 38, 40, 42 steuerbar sind.

Zur Erfassung von Meßpunkten wird zunächst der zu messende Körper 100 in die Aufnahmevorrichtung 12 eingesetzt und verspannt. Sodann wird die Aufnahmevorrichtung 12 in Z-Richtung verfahren, bis das Maximum der sich in Richtung dieser Achse 50 erstreckenden Außenkontur den Strahl der Lichtschranke 62 schneidet und dabei den Verfahrantrieb 36 stoppt. Sofern der Körper 100 keine rotationssymmetrische Außenkontur aufweist, wie es z. B. bei einem Bohrer oder Fräser der Fall ist, muß der Körper 100 anschließend noch in eine vorläufige Drehlage gebracht werden. Dazu wird der Körper 100 mittels des Drehantriebs 38 in Drehung versetzt und der Abstand mittels des Lasertriangulators 64 kontinuierlich gemessen. In einer Position, bei der einer Abstandsgradientenmaxima auftritt, wird die Drehbewegung schließlich gestoppt. Das Abstandsgradientenmaximum steht nun senkrecht zur optischen Achse 44 des Durchlichtmeßsensors 14.

Auf dem Durchlichtmeßsensor 14 wird ein Schattenbild des Körpers 100 in dieser Drehlage abgebildet. Wenn eine exakte Positionierung erforderlich ist, wird ein Punkt auf der Außenkontur markiert und auf den Durchlichtmeßsensor 16 umgeschaltet. Auf dessen Bild wird erkannt, ob der zu messende Körper 100 korrekt positioniert ist oder ob sich die Kante nicht in der Mitte, z. B. auf einem Fadenkreuz befindet. Ist der Körper nicht korrekt positioniert, wird mittels Auflichtfeinjustage der Versatz zur Mitte gemessen. Der gemessene Versatz wird unter Berücksichtigung des Körperdurchmessers zum Korrektur-Drehwinkel umgerechnet, um den Körper drehlagerichtig zu positionieren.

Nach drehlagerichtiger Positionierung und Umschaltung Auf den Durchlichtmeßsensor 14 lassen sich auf der Kontur des Schattenbildes ein oder mehrere Meßpunkte festlegen, zu denen der Durchlichtmeßsensor 14 in X-Richtung verfahren wird, bis sich eine Markierung, z. B. ein Fadenkreuz, mit diesem Meßpunkt deckt. Eine Feinpositionierung kann dabei in der Weise vorgenommen werden, daß die Markierung nach einer manuellen Grobpositionierung exakt auf die Kante positioniert wird, indem diese Kante durch Auswertung der Änderung des Helligkeits- und/oder Textur- und/oder Farbverlaufs der Abbildung des Körpers durch ein Bildverarbeitungsprogramm ermittelt wird.

Durch das Mitverfahren des Auflichtmeßsensors 16 wird derselbe Meßpunkt auch auf dem Auflichtmeßsensor 16 scharf abgebildet und läßt sich auf dem Monitor 30 darstellen, wenn dieser auf den Auflichtmeßsensor geschaltet 16 wird. Auf der Darstellung des Auflichtbildes können nun weitere Meßpunkte markiert werden. Befindet sich die zentrale Abbildung des Meßpunktes nicht auf einer Kante, so kann die Drehposition noch korrigiert werden und anschließend nach Umschaltung der Monitordarstellung auf den Durchlichtmeßsensor 14 eine eventuelle Korrektur der Position der Sensoren durch Verfahren in X-Richtung vorgenommen werden.

Derselbe Meßpunkt läßt sich auch aus einer Betrachtungsrichtung in Z-Richtung abbilden, indem das Pentaprisma 58 in den Strahlengang des Auflichtmeßsensors 16 eingefügt wird. Aus dieser Betrachtungsrichtung lassen sich dann weitere Meßpunkte markieren. Liegen die Meßpunkte nicht in einer Ebene parallel zur Abbildungsebene, so können die über den Abbildungsmaßstab oder über die Verfahrwege ermittelten vorläufigen Koordinaten durch Veränderung der Drehlage des Körpers 100 und Wiederholungen der Messungen mit dem Durchlichtmeßsensor 14 und dem Auflichtmeßsensor 16 aus den beiden unterschiedlichen Betrachtungsrichtungen sowie unter Berücksichtigung des gemessenen Drehwinkels korrigiert werden.

Messungen der Koordinaten von Meßpunkten, die in tieferen Bereichen oder in Innenbereichen des Körpers 100 liegen, lassen sich durch Abstandsmessungen ermitteln. Eine Abstandsmessung mit dem Auflichtmeßsensor 16 ist dadurch möglich, daß dieser auf dem ersten Schlitten 52 soweit verfahren wird, bis der ausgewählte Meßpunkt scharf abgebildet wird und der zurückgelegte Verfahrweg gespeichert wird. Außerdem sind Abstandsmessungen mittels des Lasertriangulators oder des mechanischen Tasters möglich.

Nachdem alle erforderlichen Meßpunkte festgelegt wurden, werden zur Berechnung geometrischer Größen, die nicht unmittelbar aus einem Meßpunkt ermittelt werden können, mehrere Meßpunkte zu Gruppen kombiniert. Unter Verwendung mathematischer Funktionen werden dann die geometrischen Parameter aus diesen Meßpunkten berechnet.

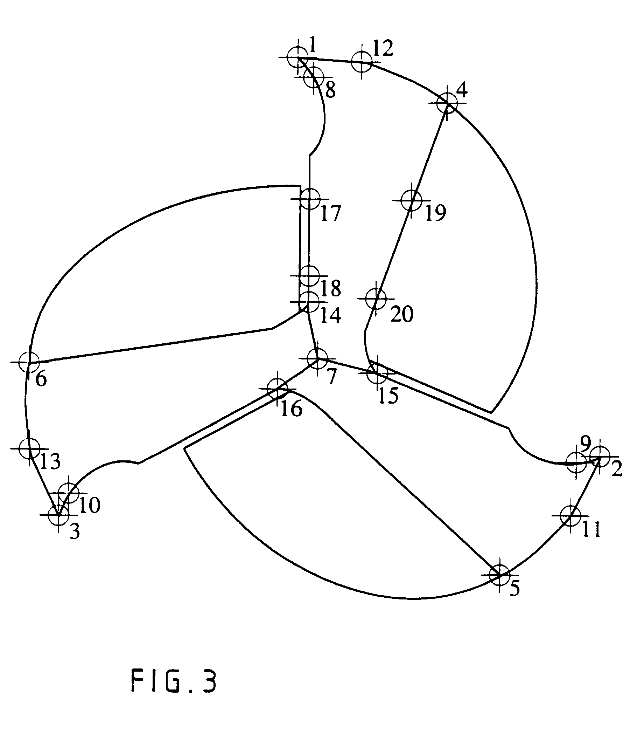

Fig. 3 zeigt als Beispiel eine Darstellung der Stirnfläche eines Fräsers, auf dem eine Reihe von Meßpunkten markiert sind, die für die Berechnung charakteristischer geometrischer Parameter dieses Körpers benötigt werden.

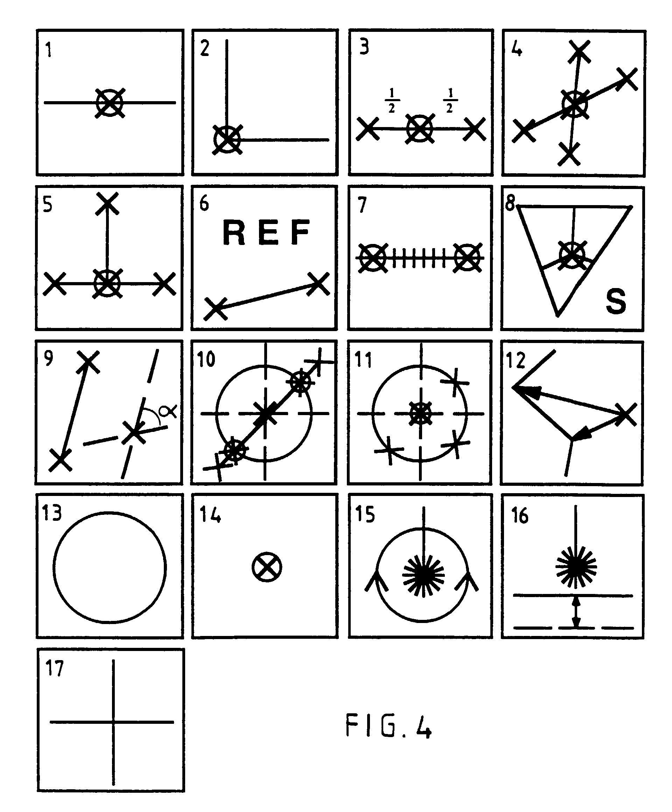

Fig. 4 zeigt eine Auswahl vorgegebener Symbole auf dem Bildschirm eines Rechners zur Bestimmung der Meßpunkte. Durch Aktivieren der einzelnen Symbole über die Tastatur einer Eingabevorrichtung oder mittels einer Maus wird ein Programm im Rechner aktiviert, das die Bestimmung der Meßpunkte automatisch vornimmt. Im einzelnen haben die Symbole folgende Bedeutung:
- 1.: Finde eine Kante - automatische Detektion der (in Fig. 3 z.B. Meßpunkt 8, 9, 10,13 etc. ermittelt)
- 2.: Finde eine Ecke - automatische Ermittlung einer Ecke (z.B. Meßpunkt 1, 2, 3 etc.)
- 3.: Mittelpunkt Strecke - liefert als Meßpunkt den Mittelpunkt zwischen zwei Meßpunkten
- 4.: Schnittpunkt Gerade/Gerade - liefert als Meßpunkt den Schnittpunkt zweier Geraden
- 5.: Lotpunkt - Projiziert einen Meßpunkt orthogonal auf eine Gerade aus zwei Meßpunkten
- 6.: Referenzbasis - bietet die Möglichkeit die Referenzbasis zu ändern
- 7.: Kantenregression - führt eine Kantenregression zwischen zwei Meßpunkten durch und ermittelt die optimale Prüfteilkante. Die Meßpunkte werden anschließend korrigiert, so daß sie auf der optimalen Kante liegen (Eliminierung von Fehlern durch Kantenausbrüche)
- 8.: Schwerpunkt - Ermittelt den Schwerpunkt von Meßpunkten (auch zur Mittelwertbildung)
- 9.: Hilfsgerade - zum Konstruieren einer beliebigen Gerade (Winkel, Position)
- 10.: Schnittpunkt Gerade/Kreis - liefert als Meßpunkt den Schnittpunkt zwischen einer Geraden und einem Kreis
- 11,: Kreismittelpunkt - liefert den Mittelpunkt eines Kreises (z. B. Meßpunkt 7 aus Meßpunkt 1,2,3). Es werden mindestens 3 Meßpunkte benötigt. Bis zu 8 Meßpunkte sind möglich.
- 12.: Min/Max-Distanz - liefert als Meßpunkt den mini- oder maximalen Abstand von einem Basispunkt auf der Prüfteilkontur
- 13.: Hilfskreis - stellt einen Meßkreis beliebiger Größe und Position dar
- 14.: Hilfspunkt - bietet die Möglichkeit, einen beliebigen Hilfspunkt zu setzen
- 15.: Laserjustage - automatisches, definiertes Ausdrehen des Körpers
- 16.: Laserabstandsmessung - Ermittlung von Meßpunkten mit dem Lasertriangulator
- 17.: Koordinatenkreuz - konstruiert ein Fadenkreuz beliebiger Größe und Position

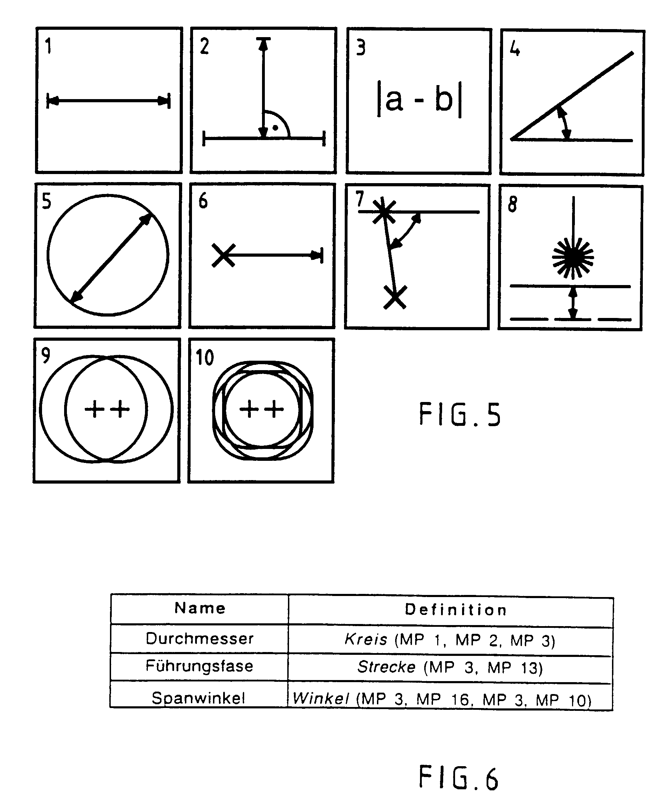

Die Bestimmung der Meßkriterien erfolgt über die Verknüpfung der Meßpunkte anhand einer Anweisungsliste, wie sie Fig. 6 zeigt. Die Anweisungsliste wird durch die Auswahl des benötigten Verknüpfungsmoduls und der Eingabe der entsprechenden Meßpunkte erstellt. Für die Verknüpfung stehen mehrere Module zur Verfügung. Fig. 5 zeigt hierzu eine Darstellung einer Auswahl vorgegebener Symbole auf dem Bildschirm eines Rechners zur Bestimmung der Meßkriterien. Hierin bedeuten:
- 1.: Strecke - ermittelt die Stecke zwischen zwei Meßpunkten. Es kann auch nur der horizontale oder vertikale Abstand zwischen den Punkten ausgegeben werden
- 2.: Abstand - ermittelt den orthogonalen Abstand eines Meßpunktes auf eine Basisgeraden aus zwei Meßpunkten
- 3.: Differenz - gibt die Differenz zwischen zwei Meßkriterien aus
- 4.: Winkel - gibt den Schnittwinkel zwischen zwei Geraden
- 5.: Kreis - führt eine Kreisapproximation mit minimal 5 Meßpunkte durch. Es können bis maximal 8 Meßpunkte eingegeben werden
- 6.: Einpunktmessung - ermittelt den Abstand eines Meßpunktes zu einem festen Bezugspunkt
- 7.: Winkel/Gerade - ermittelt den Winkel einer Geraden aus zwei Meßpunkten zu einer ortsfesten Geraden (z.B. zur Horizontalen => 0 Grad oder zur Senkrechten => 90 Grad etc.)
- 8.: Lasermessung - ermittelt den Abstand eines Meßpunktes mit dem Lasertriangulator
- 9.: Taumelschlag - ermittelt dem Taumelfehler des Werkzeuges inkl. der Spannzange
- 10.: Rundlauf - bestimmt den tatsächlichen Rundlauf durch Kompensation des mit Modul 9 gewonnenen Taumelfehlers

Der Anwender wählt das entsprechende Modul für ein Meßkriterium aus und wird vom Rechner zur Eingabe der vom Modul benötigten Meßpunkte aufgefordert. Die vorhandenen Meßpunkte können mehrfach für die einzelnen Verknüpfungen verwendet werden.

Bei der späteren Abarbeitung der Anweisungsliste durch das Rechnerprogramm wird in diesem Beispiel als erstes die Kreisbestimmung mit den Meßpunkten MP 1, MP 2 und MP 3 durchgeführt und der Durchmesser ermittelt.

Die zweite Anweisung ermittelt die Strecke zwischen den Meßpunkten MP 3 und MP 13, welche der Führungsfasenbreite der Schneide entspricht.

Die Bestimmung des Spanwinkels erfolgt mit der dritten Anweisung. Der Rechner bildet eine Gerade zwischen den Meßpunkten MP 3 und MP 16 bzw. MP 3 und MP 10 und gibt den Schnittwinkel dieser beiden Geraden aus.

Die Anweisungsliste kann beliebig viele Anweisung mit einer Vielzahl von Verknüpfungen zwischen den Meßpunkten enthalten. Es können u.a. Anweisungen für Winkel-, Abstands-, Längen- oder Kreismessungen gegeben werden. Die einzelnen Meßpunkte können mehrfach verwendet werden.

## Patentansprüche

1. Einrichtung zum Messen und Berechnen geometrischer Parameter eines Körpers (100), welche einen Grundkörper (10), eine verfahr- und drehbare Aufnahmevorrichtung (12) für den Körper (100), wenigstens zwei verfahrbare optische Flächenmeßsensoren (14, (16), wenigstens zwei diesen Flächenmeßsensoren (14, (16) zugeordnete Beleuchtungseinrichtungen (18, 20), Weg- und Winkelaufnehmer (22, 24, 26, 28), die der verfahr- und drehbaren Aufnahmevorrichtung (12) sowie den verfahrbaren optischen Flächenmeßsensoren (14, (16) zugeordnet sind, einen mit den Flächenmeßsensoren (14, (16) koppelbaren Monitor (30), einen mit den Weg- und Winkelaufnehmern (22, 24, 26, 28) sowie den optischen Flächenmeßsensoren (14, (16) oder dem Monitor (30) gekoppelten Rechner (32) mit einer Dateneingabevorrichtung (34) sowie steuerbare Verfahr- und Drehantriebe (36, 38, 40, 42) für die Aufnahmevorrichtung (12) sowie die Flächenmeßsensoren (14, (16) umfaßt, wobei die optischen Achsen (44, 46) der Flächenmeßsensoren (14, 16) rechtwinklig zueinander und rechtwinklig und/oder parallel zur Drehachse (50) der Aufnahmevorrichtung (12) ausgerichtet sind, dadurch gekennzeichnet, daß ein erster Flächenmeßsensor (14) als Durchlichtmeßsensor ausgebildet und auf einem ersten, senkrecht zur Drehachse (50) der Aufnahmevorrichtung (12) verfahrbaren Schlitten (52) angeordnet ist, und daß wenigstens ein zweiter Flächenmeßsensor (16) als Auflichtmeßsensor ausgebildet und auf einem zweiten verfahrbaren Schlitten (54) angeordnet ist, wobei der zweite Schlitten (54) auf dem ersten Schlitten (52) gelagert und senkrecht zur Drehachse (50) der Aufnahmevorrichtung und zur Verfahrrichtung des ersten Schlitten (52) verfahrbar ist, und daß die Aufnahmevorrichtung (12) und der erste Schlitten (52) relativ zueinander längs zur Drehachse (50) der Aufnahmevorrichtung (12) verfahrbar sind.

2. Einrichtung nach Anspruch 1, dadurch gekennzeichnet, daß der erste Schlitten (52) ausschließlich in einer Achsrichtung relativ zum Grundkörper (10) verfahrbar ist und daß die Aufnahmevorrichtung (12) auf einem dritten Schlitten (56) angeordnet ist, der relativ zum Grundkörper (10) in Richtung der Drehachse (52) verfahrbar ist.

3. Einrichtung nach Anspruch 1 oder 2, dadurch gekennzeichnet, daß auf dem zweiten Schlitten (54) ein dritter als Auflichtmeßsensor ausgebildeter Flächenmeßsensor angeordnet ist, dessen optische Achse senkrecht zu den optischen Achsen (44, 46) der anderen Flächenmeßsensoren (14, (16) ausgerichtet ist.

4. Einrichtung nach Anspruch 1 oder 2, dadurch gekennzeichnet, daß in den Strahlengang des zweiten Flächenmeßsensors (16) wahlweise ein Pentaprisma (58) einfügbar ist, durch welches die Meßachse des Flächenmeßsensors (16) im rechten Winkel zu seiner optischen Achse (46) und der optischen Achse (44) des ersten Flächenmeßsensors (14) umlenkbar ist.

5. Einrichtung nach einem der Ansprüche 1 bis 4, dadurch gekennzeichnet, daß die dem Durchlichtmeßsensor (14) zugeordnete Beleuchtungseinrichtung (18) koaxial zur optischen Achse (44) des Durchlichtmeßsensors (14) auf dem ersten Schlitten (52) auf der dem Durchlichtmeßsensor (14) gegenüberliegenden Seite der Drehachse (50) der Aufnahmevorrichtung (12) angeordnet ist und eine ein paralleles Lichtbündel aussendende Kollimatoroptik umfaßt und daß der Durchlichtmeßsensors eine telezentrische Optik (60) umfaßt.

6. Einrichtung nach einem der Ansprüche 1 bis 5, dadurch gekennzeichnet, daß die dem Auflichtmeßsensor (16) zugeordnete Beleuchtungseinrichtung (20) als koaxial zur optischen Achse (46) des Auflichtmeßsensors (16) angeordnete Ringleuchte ausgebildet ist.

7. Einrichtung nach einem der Ansprüche 1 bis 6, dadurch gekennzeichnet, daß die Optik des Auflichtmeßsensors (16) so justiert ist, daß die optische Achse (44) des Durchlichtmeßsensor in der Kalibrierebene des Auflichtmeßsensors (16) liegt.

8. Einrichtung nach einem der Ansprüche 1 bis 7, dadurch gekennzeichnet, daß auf dem ersten Schlitten (52) parallel und neben dem Durchlichtmeßsensor (14) sowie auf dem Niveau dessen optischer Achse (44) eine Lichtschranke (62) mit einem parallelen kleinkalibrigen Lichtbündel angeordnet ist, wobei ein Sensor der Lichtschranke mit dem Rechner (32) verbunden ist.

9. Einrichtung nach einem der Ansprüche 1 bis 8, dadurch gekennzeichnet, daß auf dem zweiten Schlitten (54) neben dem Auflichtmeßsensor (16) sowie auf dem Niveau dessen optischer Achse (46) wenigstens ein Abstandssensor (64) angeordnet ist, der mit dem Rechner (32) verbunden ist.

10. Einrichtung nach Anspruch 9, dadurch gekennzeichnet, daß der Abstandssensor (64) als optischer Abstandssensor, vorzugsweise als Lasertriangulator und/oder als mechanischer Taster ausgebildet ist.

11. Einrichtung nach einem der Ansprüche 1 bis 10, dadurch gekennzeichnet, daß der Verfahrweg der Schlitten (52, 54) auf den Körper (100) zu auf einen Sicherheitsabstand vom Körper (100) begrenzt ist.

12. Verfahren zum Messen und Berechnen geometrischer Parameter eines in einer verfahr- und drehbaren Aufnahmevorrichtung (12) aufgenommenen Körpers (100) mittels wenigstens zweier verfahrbarer optischer Flächenmeßsensoren (14, 16), denen Beleuchtungseinrichtungen (18, 20) zugeordnet sind, wobei die optischen Achsen (44, 46) der Flächenmeßsensoren (14, 16) rechtwinklig zueinander und rechtwinklig und/oder parallel zur Drehachse (50) der Aufnahmevorrichtung (12) ausgerichtet sind, dadurch gekennzeichnet, daß
a) der Körper (100) in eine vorläufige Axial- und Drehlage gebracht wird, daß
b) mittels eines als Durchlichtmeßsensor ausgebildeten Flächenmeßsensors (14) ein Schattenbild des Körpers (100) gewonnen wird, daß ein ausgewählter Meßpunkt bestimmt und auf der Kontur des Schattenbildes markiert und dessen zur Bildebene senkrechte Koordinaten durch ein Bildverarbeitungsprogramm relativ zur Ausgangslage errechnet werden und/oder wenigstens eine Bezugsmarke oder -linie eingeblendet wird und der Durchlichtmeßsensor und/oder der Körper relativ zueinander von der definierten Ausgangslage aus verfahren werden, bis sich die Bezugsmarke oder -linie mit dem ausgewählten Meßpunkt auf der Kontur des Schattenbildes deckt und die Verfahrwege gemessen und als Koordinaten der definierten Drehlage angezeigt und/oder gespeichert werden, daß
c) zur Berechnung geometrischer Parameter, zu deren Berechnung die Koordinaten mehrerer Meßpunkte der Kontur des Körpers (100) benötigt werden, der Körper (100) jeweils in eine definierte Axial- und Drehlage gebracht wird und/oder
d) derselbe ausgewählte Meßpunkt auf der Kontur des Körpers (100) als Bezugspunkt auf einem als Auflichtmeßsensor ausgebildeten Flächenmeßsensors (16) abgebildet wird, dessen optische Achse (46) senkrecht zur optischen Achse (44) des Durchlichtmeßsensors (14) ausgerichtet ist, daß die weiteren benötigten Meßpunkte auf der Abbildung des Körpers (100) gefunden und markiert und deren Koordinaten durch ein Bildverarbeitungsprogramm relativ zu dem Bezugspunkt errechnet werden und der Durchlichtmeßsensor (14) und/oder der Körper (100) relativ zueinander von der Ausgangslage aus verfahren werden, bis sich eine Bezugsmarke oder -linie mit den ausgewählten Meßpunkten auf der Abbildung des Körpers (100) decken, daß die Verfahrwege gemessen und daraus die Koordinaten der ausgewählten Meßpunkten berechnet werden und daß die Koordinaten angezeigt und/oder gespeichert werden, und/oder e) daß bei auf einer gewölbten Fläche liegenden Meßpunkten der Körper (100) anschließend um die Achse (50) der Aufnahmevorrichtung (12) gedreht wird, der Drehwinkel gemessen und angezeigt und/oder gespeichert wird und die Verfahrensschritte a), b), c) und d) wiederholt werden, bis die Koordinaten aller benötigten Meßpunkte erfaßt sind, und daß
f) die gewünschten geometrischen Parameter des Körpers, (100) wie Strecken, Winkel, Radien, Kurven, Form, Lage und Oberflächenprofilen aus den gespeicherten Koordinaten einzelner oder zu Meßpunktgruppen verknüpfter Meßpunkte nach mathematischen Funktionen berechnet und angezeigt und/oder gespeichert und/oder mit Werten einer Artikeldatenbank verglichen und/oder insbesondere nach Qualitätsklassen bewertet und sortiert und/oder zur statistischen Auswertung und automatischen Nachsteuerung einer Produktionsmaschine verwendet werden.

13. Verfahren nach Anspruch 12, dadurch gekennzeichnet, daß die Koordinaten von Meßpunkten des Körpers (100), die in tieferen Bereichen als der Außenkontur des Körpers (100) liegen, durch Verfahren des Auflichtmeßsensors (16) von einer Ausgangsposition in eine Position, in der der Meßpunkt auf dem Auflichtmeßsensors (16) scharf abgebildet wird, oder durch Abstandsmessung mit dem optischen Abstandssensor (64) ermittelt werden.

14. Verfahren nach Anspruch 12, dadurch gekennzeichnet, daß der Auflichtmeßsensor (16) gemeinsam mit dem Durchlichtmeßsensor (14) verfahren wird und dabei der Auflichtmeßsensor (16) auf die optische Achse (44) des Durchlichtmeßsensors (14) fokussiert ist.

15. Verfahren nach Anspruch 12 oder 14, dadurch gekennzeichnet, daß eine anfängliche Axialpositionierung des Körpers (100) dadurch vorgenommen wird, daß der Körper (100) und der Durchlichtmeßsensor (14) relativ zueinander soweit in Richtung der Drehachse (50) verfahren werden, bis das Maximum der sich in Richtung der Drehachse erstreckenden Außenkontur des Körpers (100) den Strahl einer auf dem Niveau der optischen Achse (44) des Durchlichtmeßsensor (14) angeordneten Lichtschranke (62) schneidet und die Verfahrwege angezeigt und/oder gespeichert werden.

16. Verfahren nach einem der Ansprüche 12 oder 14 bis 15, dadurch gekennzeichnet, daß eine anfängliche Drehpositionierung des Körpers (100) dadurch vorgenommen wird, daß der Körper (100) gedreht und mittels eines Abstandssensors (64) eine kontinuierliche Messung des Abstandes zwischen der Oberfläche des Körpers (100) und dem Abstandssensor (64) vorgenommen wird und der Körper (100) schließlich in einer Drehlage versetzt wird, in der eines der Abstandsminima oder der Abstandsgradientenmaxima in einer vorgegebenen Drehlage zur optischen Achse (44) des Durchlichtmeßsensors (14) steht.

17. Verfahren nach Anspruch 16, dadurch gekennzeichnet, daß eine Schiefstellung des Körpers (100) durch Differenzbildung unterschiedlicher Durchmesser- oder Abstandsextremwerte in wenigstens einer Ebene ermittelt wird, daß aus der Differenz der Durchmesser- oder Abstandsextremwerte ein Taumelkegel berechnet wird und daß die berechneten Koordinaten um den Abstand der Kegelmantelfläche von der Drehachse (50) korrigiert werden.

18. Verfahren nach einem der Ansprüche 12 bis 17, dadurch gekennzeichnet, daß die Meßpunkte manuell vorgegeben werden.

19. Verfahren nach einem der Ansprüche 12 bis 17, dadurch gekennzeichnet, daß Suchbereiche der Meßpunkte in einem ersten Schritt manuell vorgegeben und in einem zweiten Schritt in diesen Suchbereichen liegende Ecken und/oder Kanten des Körpers (100) automatisch ermittelt werden, indem die Lage der Ecken und/oder Kanten aus der Auswertung der Änderung des Helligkeits- und/oder Textur- und/oder Farbverlaufs der Abbildung des Körpers (100) auf den Flächenmeßsensoren (14, 16) durch ein Bildverarbeitungsprogramm ermittelt wird.

20. Verfahren nach einem der Ansprüche 12 bis 17, dadurch gekennzeichnet, daß Suchbereiche der Meßpunkte in einem ersten Schritt durch Eingabe von Parametern für Gruppen von zu messenden Körpern (100) berechnet werden, daß die Suchbereiche in einem zweiten Schritt automatisch vorgegeben werden und in einem dritten Schritt die in diesen Suchbereichen liegende Ecken und/oder Kanten des Körpers (100) automatisch ermittelt werden, indem die Lage der Ecken und/oder Kanten aus der Auswertung der Änderung des Helligkeits- und/oder Textur- und/oder Farbverlaufs der Abbildung des Körpers (100) auf den Flächenmeßsensoren (14, 16) durch ein Bildverarbeitungsprogramm ermittelt wird.

21. Verfahren nach einem der Ansprüche 12 bis 17, dadurch gekennzeichnet, daß die Meßpunkte automatisch durch Scannen einer Vielzahl von Punkten auf Ecken und/oder Kanten des Körpers (100) festgelegt werden, wobei die Lage der Ecken und/oder Kanten aus der Auswertung der Änderung des Helligkeits- und/oder Textur- und/oder Farbverlaufs der Abbildung des Körpers (100) auf den Flächenmeßsensoren (14, 16) durch ein Bildverarbeitungsprogramm ermittelt wird.

22. Verfahren nach einem der Ansprüche 12 bis 21, dadurch gekennzeichnet, daß aus den geometrischen Parametern eines als Bearbeitungswerkzeug ausgebildeten Körpers (100) die geometrischen Parametern eines mit dem Bearbeitungswerkzeug bearbeiteten Werkstückes berechnet werden.

23. Verfahren nach einem der Ansprüche 12 bis 21, dadurch gekennzeichnet, daß aus den geometrischen Parametern eines als Werkstück ausgebildeten Körpers (100) die geometrischen Parametern eines zu dessen Fertigung dienenden Bearbeitungswerkzeugs berechnet werden.

## Claims

1. Device for measuring and calculating geometrical parameters of a body (100), which comprises a basic body (10), a movable and rotatable holding fixture (12) for the body (100), at least two movable, optical surface sensors (14, 16), at least two lighting devices (18, 20) associated with said surface sensors (14, 16), angle and displacement pick-ups (22, 24, 26, 28), which are associated with the movable and rotatable holding fixture (12) and the movable, optical surface sensors (14, 16), a monitor (30) couplable with the surface sensors (14, 16), a computer (32) having a data input device (34) coupled to the angle and displacement pick-ups (22, 24, 26, 28) and the optical surface sensors (14, 16) or the monitor (30), as well as controllable movement and rotation drives (36, 38, 40, 42) for the holding fixture (12), as well as the surface sensors (14, 16), the optical axes (44, 46) of the surface sensors (14, 16) being oriented at right angles to one another and at right angles and/or parallel to the rotation axis (50) of the holding fixture (12), characterized in that a first surface sensor (14) is constructed as a transmitted light sensor and is positioned on a first carriage (52) movable perpendicular to the rotation axis (50) of the holding fixture (12), and that at least one second surface sensor (16) is constructed as a reflected light sensor and is placed on a second, movable carriage (54), the second carriage (54) being mounted on the first carriage (52) and movable perpendicular to the rotation axis (50) of the holding fixture and to the movement direction of the first carriage (52), and that the holding fixture (12) and the first carriage (52) are movable relative to one another along the rotation axis (50) of the holding fixture (12).

2. Device according to claim 1, characterized in that the first carriage (52) is movable exclusively in an axial direction relative to the basic body (10) and that the holding fixture (12) is placed on a third carriage (56) movable relative to the basic body (10) in the direction of the rotation axis (50).

3. Device according to claim 1 or 2, characterized in that on the second carriage (54) is located a third surface sensor constructed as a reflected light sensor, whose optical axis is oriented perpendicular to the optical axes (44, 46) of the other surface sensors (14, 16).

4. Device according to claim 1 or 2, characterized in that, as desired, a pentaprism (58) can be inserted in the optical path of the second surface sensor (16) and through which the measurement axis of the surface sensor (16) can be deflected at right angles to its optical axis (46) and the optical axis (44) of the first surface sensor (14).

5. Device according to one of the claims 1 to 4, characterized in that the lighting device (18) associated with the transmitted light sensor (14) is positioned coaxially to the optical axis (44) of the transmitted light sensor (14) on the first carriage (52) on the side of the rotation axis (50) of the holding fixture (12) opposite to the transmitted light sensor (14) and comprises a collimating optics emitting a parallel light bundle and that the transmitted light sensor comprises a telecentric optics (60).

6. Device according to one of the claims 1 to 5, characterized in that the lighting device (20) associated with the reflected light sensor (16) is constructed as a ring lamp arranged coaxially to the optical axis (46) of the reflected light sensor (16).

7. Device according to one of the claims 1 to 6, characterized in that the optics of the reflected light sensor (16) are so adjusted that the optical axis (44) of the transmitted light sensor is in the calibrating plane of the reflected light sensors (16).

8. Device according to one of the claims 1 to 7, characterized in that a light barrier (62) with a parallel, small-diameter light bundle is located on the first carriage (52) parallel and juxtaposed with the transmitted light sensor (14) and level with its optical axis (44), a sensor of the light barrier being connected to the computer (32).

9. Device according to one of the claims 1 to 8, characterized in that at least one distance sensor (64), connected to the computer (32), is placed on the second carriage (54) alongside the reflected light sensor (16) and level with its optical axis (46).

10. Device according to claim 9, characterized in that the distance sensor (64) is constructed as an optical distance sensor, preferably as a laser triangulator and/or mechanical feeler.

11. Device according to one of the claims 1 to 10, characterized in that the movement path of the carriages (52, 54) on the body (100) is limited to a safe distance from the body (100).

12. Method for measuring and calculating geometrical parameters of a body (100) received in a movable and rotatable holding fixture (12) by means of at least two movable, optical surface sensors (14, 16) with which are associated lighting devices (18, 20), optical axes (44, 46) of the surface sensors (14, 16) being oriented at right angles to one another and at right angles and/or parallel to the rotation axis (50) of the holding fixture (12), characterized in that
a) the body (100) is brought into a provisional axial and rotary position, that
b) by means of a surface sensor (14) constructed as a transmitted light sensor a shadow image of the body (100) is obtained, which establishes a selected measurement point and marks on the contour of the shadow image and its coordinates perpendicular to the image plane are calculated by an image processing program relative to the starting position and/or at least one reference mark or line is faded in and the transmitted light sensor and/or the body are moved relative to one another from the defined starting position until the reference mark or line coincides with the selected measurement point on the contour of the shadow image and the movement paths are measured and displayed and/or stored as coordinates of the defined rotation position, that
c) for calculating geometrical parameters, for whose calculation the coordinates of several measurement points of the contour of the body (100) are required, said body (100) is brought into a defined axial and rotation position and/or
d) the same selected measurement point on the contour of the body (100) is imaged as a reference point on a surface sensor (16) constructed as a reflected light sensor and whose optical axis (46) is oriented perpendicular to the optical axis (44) of the transmitted light sensor (14), that the further required measurement points are found on the image of the body (100) and marked and their coordinates are calculated by an image processing program relative to the reference point and the transmitted light sensor (14) and/or the body (100) are moved relative to one another from the starting position until a reference mark or line coincides with the selected measurement points on the image of the body (100), that the movement paths are measured and the coordinates of the selected measurement points are calculated therefrom and that the coordinates are displayed and/or stored, and/or
e) that in the case of measurement points of the body (100) located on a curved surface rotation subsequently takes place about the axis (50) of the holding fixture (12), the rotation angle is measured and displayed and/or stored and method steps a), b), c) and d) are repeated until the coordinates of all the necessary measurement points are determined, and that
f) the desired, geometrical parameters of the body (100), such as lines, angles, radii, curves, shape, position and surface profiles are calculated and displayed and/or stored and/or compared with values of an article data bank and/or in particular evaluated and sorted according to quality classes and/or used for statistical evaluation and automatic follow-up of a production machine from the stored coordinates of individual measurement points or associated as measurement point groups on the basis of mathematial functions.

13. Method according to claim 12, characterized in that the coordinates of measurement points of the body (100), which are in lower areas than the outer contour of the body (100), are determined by moving the reflected light sensors (16) from a starting position into a position in which the measurement point is sharply imaged on the reflected light sensors (16), or are determined by distance measurement with the optical distance sensor (64).

14. Method according to claim 12, characterized in that the reflected light sensor (16) is moved together with the transmitted light sensor (14) and the reflected light sensor (16) is focussed on the optical axis (44) of the transmitted light sensor (14).

15. Method according to claim 12 or 14, characterized in that an initial axial positioning of the body (100) is brought about in that the body (100) and the transmitted light sensor (14) are moved relative to one another in the direction of the rotation axis (50) until the maximum of the outer contour of the body (100) extending in the direction of the rotation axis intersects the beam of a light barrier (62) positioned level with the optical axis (44) of the transmitted light sensor (14) and the movement paths are displayed and/or stored.

16. Method according to one of the claims 12 or 14/15, characterized in that an initial rotary position of the body (100) is obtained in that the body (100) is rotated and by means of a distance sensor (64) there is a continuous measurement of the distance between the surface of the body (100) and the distance sensor (64) and the body (100) is finally moved into a rotation position in which one of the distance minima or distance gradient maxima is in a predetermined rotation position with respect to the optical axis (44) of the transmitted light sensor (14).

17. Method according to claim 16, characterized in that an inclined position of the body (100) is determined by difference formation of different diameter or distance extreme values in at least one plane, that from the difference of the diameter or distance extreme values a wobble cone is calculated and that the calculated coordinates are corrected by the distance of the cone shell surface from the rotation axis (50).

18. Method according to one of the claims 12 to 17, characterized in that the measurement points are manually predetermined.

19. Method according to one of the claims 12 to 17, characterized in that detection ranges of the measurement points are manually predetermined in a first step and in a second step angles and/or edges of the body (100) are automatically determined in said detection ranges, in that the position of the angles and/or edges are determined from the evaluation of the change of the brightness and/or texture and/or colour course of the image of the body (100) on the surface sensors (14, 16) by an image processing program.

20. Method according to one of the claims 12 to 17, characterized in that detection ranges of the measurement points are calculated in a first step by inputting parameters for groups of bodies (100) to be measured, that the detection ranges are automatically predetermined in a second step and in a third step the angles and/or edges of the body (100) in said detection ranges are automatically determined, in that the position of the angles and/or edges are determined from the evaluation of the change of the brightness and/or texture and/or colour course of the image of the body (100) on the surface sensors (14, 16) by an image processing program.

21. Method according to one of the claims 12 to 17, characterized in that the measurement points are automatically fixed by scanning a plurality of points on angles and/or edges of the body (100), the position of the angles and/or edges being determined from the evaluation of the change of the brightness and/or texture and/or colour course of the image of the body (100) on the surface sensors (14, 16) by an image processing program.

22. Method according to one of the claims 12 to 21, characterized in that the geometrical parameters of a workpiece machined with the machining tool are calculated from the geometrical parameters of a body (100) constructed as a machining tool.

23. Method according to one of the claims 12 to 21, characterized in that the geometrical parameters of a machining tool used for manufacturing purposes are calculated from the geometrical parameters of a body (100) constructed as a workpiece.

## Revendications

1. Dispositif de mesure et de calcul de paramètres géométriques d'un corps (100) qui comprend un corps de base (10), un support mobile et rotatif (12) du corps (100), au moins deux capteurs optiques et mobiles de mesure de surface (14, 16), au moins deux installations d'éclairage (18, 20) affectées à ces capteurs de mesure de surface (14, 16), des capteurs de déplacement et d'angle (22, 24, 26, 28) qui sont affectés au support mobile et rotatif (12) ainsi qu'aux capteurs optiques et mobiles de mesure de surface (14, 16), un moniteur (30) qui peut être couplé aux capteurs optiques et mobiles de mesure de surface (14, 16), un calculateur (32) couplé aux capteurs de déplacement et d'angle (22, 24, 26, 28) ainsi qu'aux capteurs optiques et mobiles de mesure de surface (14, 16) ou au moniteur (30), et comportant un dispositif d'entrée de données (34) ainsi que des organes d'entraînement mobiles, rotatifs et pouvant être commandés (36, 38, 40, 42) pour le support (12) et les capteurs de mesure de surface (14, 16), les axes optiques (44, 46) des capteurs de mesure de surface (14, 16) étant perpendiculaires l'un à l'autre et perpendiculaires et/ou parallèles à l'axe de rotation (50) du support (12) caractérisé en ce qu'un premier capteur de mesure de surface (14) est un capteur de mesure de lumière transmise, placé sur un premier coulisseau (52) qui est mobile verticalement par rapport à l'axe de rotation (50) du support (12), et en ce qu'au moins le deuxième capteur de mesure de surface (16) est un capteur de mesure de lumière incidente, placé sur un deuxième coulisseau mobile (54), le deuxième coulisseau (54) étant posé sur le premier coulisseau (52) et étant mobile verticalement par rapport à l'axe de rotation (50) du support et à la direction de déplacement du premier coulisseau (52), et en ce que le support (12) et le premier coulisseau (52) sont mobiles l'un par rapport à l'autre le long de l'axe de rotation (50) du support (12).

2. Dispositif suivant la revendication 1, caractérisé en ce que le premier coulisseau (52) est exclusivement mobile dans une direction axiale par rapport au corps de base (10) et en ce que le support (12) est placé sur un troisième coulisseau (56) qui est mobile par rapport au corps de base (10) dans la direction de l'axe de rotation (50).

3. Dispositif suivant la revendication 1 ou 2, caractérisé en ce que, sur le deuxième coulisseau (54), est placé un troisième capteur de mesure de surface sous la forme de capteur de mesure de lumière incidente, dont l'axe optique est vertical par rapport aux axes optiques (44, 46) des autres capteurs de mesure de surface (14, 16).

4. Dispositif suivant la revendication 1 ou 2, caractérisé en ce que, sur le trajet des rayons du deuxième capteur de mesure de surface (16), est en option interposé un prisme pentagonal (58) par lequel l'axe de mesure du capteur de mesure de surface (16) peut être changé de direction d'un angle droit par rapport à son axe optique (46) et à l'axe optique (44) du premier capteur de mesure de surface (14).

5. Dispositif suivant une des revendications 1 à 4, caractérisé en ce que l'appareil d'éclairage (18) associé au capteur de mesure de lumière transmise (14) est coaxial à l'axe optique (44) du capteur de mesure de lumière transmise (14), sur le côté de l'axe de rotation (50) du support (12) opposé au capteur de mesure de lumière transmise (14), et comprend une optique de collimateur émettant un faisceau lumineux parallèle, et en ce que le capteur de mesure de lumière transmise comprend une optique télécentrique (60).

6. Dispositif suivant une des revendications 1 à 5, caractérisé en ce que l'appareil d'éclairage (20) associé au capteur de mesure de lumière incidente (16) est formé par une lumière annulaire coaxiale à l'axe optique (46) du capteur de mesure de lumière incidente (16).

7. Dispositif suivant une des revendications 1 à 6, caractérisé en ce que l'optique du capteur de mesure de lumière incidente (16) est réglée de manière que l'axe optique (44) du capteur de mesure de lumière transmise soit dans le plan de calibrage du capteur de mesure de lumière incidente (16).

8. Dispositif suivant une des revendications 1 à 7, caractérisé en ce que, sur le premier coulisseau (52) parallèlement et près du capteur de mesure de lumière transmise (14) ainsi que sur le niveau de son axe optique (44), est placée une barrière lumineuse (62) avec un faisceau lumineux parallèle de petit calibre, un détecteur de barrière lumineuse étant relié au calculateur (32).

9. Dispositif suivant une des revendications 1 à 8, caractérisé en ce que, sur le deuxième coulisseau (54) près du capteur de mesure de' lumière incidente (16) ainsi que sur le niveau de son axe optique (46), est placé au moins un capteur de distance (64) qui est relié au calculateur (32).

10. Dispositif suivant la revendication 9, caractérisé en ce que le capteur de distance (64) est un capteur optique de distance, de préférence un triangulateur laser et/ou un palpeur mécanique.

11. Dispositif suivant une des revendications 1 à 10, caractérisé en ce que la mobilité des coulisseaux (52, 54) sur le corps (100) est limitée à une distance de sécurité du corps (100).

12. Procédé de mesure et de calcul de paramètres géométriques d'un corps (100) tenu dans un support mobile et rotatif (12), au moyen d'au moins deux capteurs de mesure de surface optiques et mobiles (14, 16) auxquels sont affectées des installations d'éclairage (18, 20), les axes optiques (44, 46) des capteurs de mesure de surface (14, 16) étant perpendiculaires l'un à l'autre et/ou parallèles à l'axe de rotation (50) du support (12), caractérisé en ce que:
a) on met le corps (100) en position préliminaire axiale et de rotation, en ce que,
b) au moyen d'un capteur de mesure de surface (14) en forme de capteur de mesure de lumière transmise, on obtient une image du corps (100), en ce qu'on définit et on marque sur le contour de l'image un point de mesure choisi dont on calcule les coordonnées, verticales par rapport au plan d'image par un programme de traitement d'image par rapport à la position de sortie, et/ou on superpose au moins une marque de référence ou une ligne de référence, et on déplace le capteur de mesure de lumière transmise et/ou le corps, l'un par rapport à l'autre, de la position définie de sortie jusqu'à ce que la marque ou la ligne de référence coïncident avec le point de mesure choisi sur le contour de l'image, et on mesure les déplacements et on affiche et/ou on enregistre comme coordonnées la position de rotation définie, en ce que
c) pour le calcul des paramètres géométriques, pour lequel on a besoin des coordonnées de nombreux points de mesure du contour du corps (100), on amène chaque fois le corps en position axiale et de rotation définie, et/ou
d) on représente le même point choisi sur le contour du corps (100) comme point de référence sur un capteur de mesure de surface (16) servant de capteur de mesure de lumière incidente dont l'axe optique (46) est perpendiculaire à l'axe optique (44) du capteur de mesure de lumière transmise (14), en ce qu'on trouve et marque les autres points de mesure nécessaires sur l'image du corps (100), et leurs coordonnées calculées par un programme de traitement d'image par rapport au point de référence, et on déplace l'un par rapport à l'autre le capteur de mesure de lumière transmise (14) et/ou le corps (100) de la position de sortie jusqu'à ce qu'une marque de référence ou une ligne de référence recouvrent les points de mesure choisis sur l'image du corps (100), en ce qu'on mesure les trajets de déplacement sont mesurés et donc qu'on calcule les coordonnées des points de mesure, et en ce qu'on relève et/ou on met en mémoire les coordonnées, et/ou
e) en ce que, en raccordant les points de mesure du corps (100) sur une surface bombée, on fait tourner le support (12) autour de l'axe (50, on mesure, on relève et/ou on met en mémoire l'angle de rotation, et on répète les étapes de traitement a), b), c) et d) jusqu'à ce que les coordonnées de tous les points de mesure nécessaires soient obtenues, et en ce que,
f) avec les coordonnées en mémoire des points de mesure individuels ou reliés en groupes de points de mesure, d'après des fonctions mathématiques, les paramètres géométriques souhaités du corps (100) comme distances, angles, rayons, courbures, formes, positions et profils de surfaces sont calculés et indiqués et/ou mis en mémoire et/ou comparés avec des valeurs d'une banque de données d'objet et/ou évalués et triés en particulier suivant des classes de qualité et/ou utilisés pour des évaluations statistiques et la poursuite automatique d'une machine de production.

13. Procédé suivant la revendication 12, caractérisé en ce que les coordonnées des points de mesure du corps (100) qui sont dans des domaines plus profonds comme le contour extérieur du corps (100), sont évaluées par traitement du capteur de mesure de lumière incidente (16) d'une position de sortie dans une position dans laquelle le point de mesure est distinctement imagé sur le capteur de mesure de lumière incidente (16), ou par mesure de distance avec le capteur de distance optique (64).

14. Procédé suivant la revendication 12, caractérisé en ce que le capteur de mesure de lumière incidente (16) est traité en commun avec le capteur de mesure de lumière transmise (14) et ainsi le capteur de mesure de lumière incidente (16) est focalisé sur l'axe optique (44) du capteur de mesure de lumière transmise (14).

15. Procédé suivant la revendication 12 ou 14, caractérisé en ce qu'une position axiale de début du corps (100) est prévue de façon que le corps (100) et le capteur de mesure de lumière transmise (14) soient l'un par rapport à l'autre déplacés aussi dans la direction de l'axe de rotation (50)jusqu'à ce que le maximum du contour extérieur du corps allant dans la direction de l'axe de rotation coupe le rayon d'un barrage photodétecteur (62) placé sur le niveau de l'axe optique (44) du capteur de mesure de lumière transmise (14) et que les déplacements soient indiqués et/ou mis en mémoire.

16. Procédé suivant une des revendications 12 ou 14 à 15, caractérisé en ce qu'une position de rotation de début du corps (100) est prévue de façon que le corps (100) soit tourné et, au moyen d'un capteur de distance (64), qu'une mesure continue de distance est prévue entre la surface du corps (100) et le capteur de distance (64), et que le corps (100) est enfin décalé dans une position de rotation dans laquelle se tient un des minimum de distance ou de maximum de gradient de distance dans une position de rotation prédéfinie pour l'axe optique (44) du capteur de mesure de lumière transmise (14).

17. Procédé suivant la revendication 16, caractérisé en ce qu'une inclinaison du corps (100) est déterminée par formation de la différence des valeurs extrêmes de diamètre ou de distance dans au moins un plan, en ce qu'avec la différence des valeurs extrêmes de diamètre ou de distance, est calculé un cône de nutation, et en ce que les coordonnées calculées sont corrigées de la distance de la surface latérale de cône à l'axe de rotation (50).

18. Procédé suivant une des revendications 12 à 17, caractérisé en ce que les points de mesure sont manuellement prédéfinis.

19. Procédé suivant une des revendications 12 à 17, caractérisé en ce que des zones de recherche des points de mesure sont, dans une première phase, manuellement prédéfinies et, dans une deuxième phase, automatiquement déterminés dans des angles et/ou des côtés du corps (100) appartenant à ces zones de recherche, où la position des angles et/ou des côtés est définie avec l'évaluation de la modification du gradient de luminosité et/ou de texture et/ou de couleur de l'image du corps (100) sur les capteurs de mesure de surface (14, 16) par un programme de traitement d'image.

20. Procédé suivant une des revendications 12 à 17, caractérisé en ce que des zones de recherche des points de mesure sont, dans une première phase, calculées par une entrée de paramètres pour des groupes du corps (100) à mesurer, en ce que les zones de recherche sont, dans une deuxième phase, automatiquement prédéfinies et sont, dans une troisième phase, déterminées automatiquement, les angles et/ou les côtés du corps (100) se trouvant dans ces zones de recherche, où la position des angles et/ou des côtés est déterminée avec l'évaluation de la modification du gradient de luminosité et/ou de texture et/ou de couleur de l'image du corps (100) sur les capteurs de mesure de surface (14, 16) par un programme de traitement d'image.

21. Procédé suivant une des revendications 12 à 17, caractérisé en ce que les points de mesure sont automatiquement définis par balayage d'un pluralité de points sur des angles et/ou des côtés du corps (100), la position des angles et/ou des côtés étant déterminée avec l'évaluation de la modification du gradient de luminosité et/ou de texture et/ou de couleur de l'image du corps (100) sur les capteurs de mesure de surface (14, 16) par un programme de traitement d'image.

22. Procédé suivant une des revendications 12 à 21, caractérisé en ce qu'avec les paramètres géométriques d'un corps (100) pris comme outil de traitement, on calcule les paramètres géométriques d'un pièce d'usinage traitée avec l'outil de traitement.

23. Procédé suivant une des revendications 12 à 21, caractérisé en ce qu'avec les paramètres géométriques d'un corps (100) pris comme pièce d'usinage, on calcule les paramètres géométriques d'un outil de traitement servant à sa fabrication.
